# EUROPÄISCHE PATENTSCHRIFT

(11) **EP 3 334 268 B1**
(45) Veröffentlichungstag und Bekanntmachung des Hinweises auf die Patenterteilung: **24.07.2019**
(21) Anmeldenummer: 16751583.2
(22) Anmeldetag: 12.08.2016
(51) Int. Cl.: A01C 7/10, A01C 17/00

(54) **STREUER**
SPREADER
ÉPANDEUR

(30) Priorität: 14.08.2015 AT 501612015 U
(43) Veröffentlichungstag der Anmeldung: 20.06.2018
(73) Patentinhaber: Schöls, Jürgen, 3753 Hötzelsdorf (AT)
(72) Erfinder: Schöls, Jürgen, 3753 Hötzelsdorf (AT)
(74) Vertreter: Müllner, Martin
(86) Internationale Anmeldenummer: PCT/EP2016/069272
(87) Internationale Veröffentlichungsnummer: WO 2017/029230

(56) Entgegenhaltungen:
- EP-A1- 0 379 103
- DE-A1- 2 818 227
- DE-A1- 3 331 169
- DE-A1- 4 109 417
- FR-A1- 2 608 360

## Beschreibung

### Technisches Gebiet

Die vorliegende Erfindung betrifft einen Streuer mit einem Rahmen, der aus einem Grundrahmen und aus einem Zusatzrahmen besteht, wobei am Grundrahmen ein Behälter befestigt ist, wobei unter dem Behälter am Grundrahmen eine Dosiereinheit angeordnet ist, wobei unter dem Behälter am Zusatzrahmen ein Streuteller befestigt ist und wobei der Zusatzrahmen mittels eines Schnellverschlusses am Grundrahmen befestigt ist.

### Stand der Technik

Tellerstreuer mit einem Rahmen, an dem ein Behälter befestigt ist und an dem unter dem Behälter ein Sammeltrichter und ein Streuteller befestigt sind, sind bekannt und werden z. B. verwendet, um Saatgut auszubringen. Hier ist vor allem an Kleinstreuer gedacht, bei denen der Behälter z.B. 40 I oder 100 I Samen fasst. Unter dem Behälter befindet sich eine verstellbare Öffnung, damit die Streumenge eingestellt werden kann. Darunter befindet sich dann der Sammeltrichter, der das Saatgut auf einen Punkt des Streutellers aufgibt, von wo das Saatgut von (meist zwei) Wurfschaufeln verteilt wird. Durch Änderung der Drehzahl des Streutellers kann die Streubreite eingestellt werden.

Ein Streuer der eingangs genannten Art ist DE 3331169 A bekannt. Bei diesem Streuer hat der Behälter unten eine Auslauföffnung, deren Öffnungsweite zur Einstellung verschiedener Verteilermengen verändert werden kann, sodass man diese Auslauföffnung auch als Dosiereinheit bezeichnen könnte.

Bekannt sind auch so genannte pneumatische Sägeräte, mit denen während der Bodenbearbeitung gleichzeitig auch Saatgut ausgebracht wird. Bei diesen Geräten befindet sich unter dem Behälter eine Zellenradschleuse, um eine exakte Dosierung zu gewährleisten. Unter der Zellenradschleuse befindet sich ein Verteiler. Die einzelnen Zellenräder der Zellenradschleuse dosieren jeweils in einen eigenen Teilbereich des Verteilers. Je nach Ausführung der Zellenradschleuse und des Verteilers ergeben sich verschiedene Anzahlen von Teilströmen, z.B. 2, 4 oder 6. Infolge der Zellenradschleuse sind die Teilströme relativ konstant und relativ genau gleich groß. Von dem Verteiler führen Schläuche (z.B. 2, 4 oder 6 Schläuche) zu Pralltellern, wo das Saatgut auftrifft und verteilt wird.

Wenn gleichzeitig zur Bodenbearbeitung auch Saatgut ausgebracht wird, ist es besser, solch ein Sägerät zu verwenden, weil dieses im Vergleich zu Tellerstreuern das Saatgut gleichmäßiger verteilt, insbesondere weniger von Wind beeinflusst wird.

Nachteilig sind vor allem für Kleinbetriebe die zusätzlichen Kosten, da ein Tellerstreuer in der Regel bereits vorhanden ist. Daher werden oft Tellerstreuer verwendet, wenn Saatgut parallel zur Bodenbearbeitung ausgebracht werden soll. Dadurch wird das Saatgut in den meisten Fällen aber nur unzureichend genau verteilt ausgebracht, was zu einer Ertragsminderung bzw. zu einer unnötig hohen Aussaatmenge führt.

### Darstellung der Erfindung

Es ist Aufgabe der vorliegenden Erfindung, hier Abhilfe zu schaffen.

Gemäß der vorliegenden Erfindung ist daher bei einem Streuer der eingangs genannten Art vorgesehen, dass die Dosiereinheit eine Zellenradschleuse aufweist, die unten einen Auslass für einen Sammeltrichter aufweist, und dass der Sammeltrichter an diesem Auslass der Dosiereinheit befestigt ist. Durch das Vorsehen einer Dosiereinheit mit einer Zellenradschleuse wird ein einfacher Umbau des Tellerstreuers möglich, sodass er auch für ein Sägerät verwendbar ist. Als zusätzlicher Vorteil kommt hinzu, dass auch in der Funktion als Tellerstreuer wegen der Zellenradschleuse eine sehr exakte Dosierung erfolgt. Neben der exakten Dosierung ist auch die Möglichkeit der geschwindigkeitsabhängigen Regelung der Ausbringmenge möglich. Dabei wird die Drehzahl der Zellenradschleuse elektronisch in Abhängigkeit der Fahrgeschwindigkeit nachgeregelt, wodurch die ausgebrachte Menge an Saatgut pro Flächeneinheit immer konstant gehalten wird. Das Gerät wird dadurch zwar etwas teurer, aber das wird durch den Vorteil, dass es für ein Sägerät umgebaut werden kann und so die Kosten für ein weiteres Gerät eingespart werden können, mehr als wettgemacht. Weiters kann durch die genaue Ausbringung auch Saatgut eingespart werden, wodurch sich die Mehrkosten schnell amortisieren.

Vorzugsweise ist der Zusatzrahmen am Grundrahmen um eine Achse schwenkbar gelagert, sodass er nach Lösen des Schnellverschlusses nach unten wegschwenkbar ist. Auf diese Weise ist es sehr einfach möglich, die Dosiermenge zu überprüfen bzw. einzustellen. Man kann dadurch den Streuteller nach unten wegklappen und die von der Dosiereinheit gelieferte Menge in einem darunter gehaltenen Behälter auffangen und dann abwägen. Um bei herkömmlichen Tellerstreuern die Dosiermenge exakt einzustellen, ist es nötig, den Kalibriervorgang mit der bei der Arbeit tatsächlich eingestellten Tellerdrehzahl durchzuführen, da durch die Luftverwirbelungen des Streutellers und der damit verbundenen Sogwirkung die Durchflussmenge in kg/min auch direkt von der Tellerdrehzahl abhängig ist. Dabei muss man die vom Streuteller weggeschleuderte Menge "einfangen", d.h. man muss einen Behälter (z. B. einen Sack) um den Streuteller herum positionieren und einigermaßen abdichten, was wesentlich umständlicher ist. Durch die aktive Dosierung des Saatguts bei der vorliegenden Erfindung ist keine Sogwirkung auf das Saatgut vorhanden. Dadurch kann der Kalibriervorgang bei stehendem (weggeklapptem) Streuteller durchgeführt werden, was sowohl einfacher als auch sicherer ist. Weiters ist auch bei Änderung der Arbeitsbreite und damit der Streutellerdrehzahl keine Änderung der Durchflussrate in kg/min gegeben - im Gegensatz zu herkömmlichen Tellerstreuern.

Wie bereits erwähnt, ist es ein Vorteil des erfindungsgemäßen Tellerstreuers, dass er für ein Sägerät umgebaut werden kann. Es ist daher ein weiterer Gegenstand der Erfindung (in der Art "kit of parts"), dass ein Verteiler vorgesehen ist, der nach Entfernen des Zusatzrahmens und des Sammeltrichters an den Auslass der Dosiereinheit anschließbar ist. Der Zusatzrahmen mit dem Streuteller und der Sammeltrichter werden bei dieser Anwendung demontiert.

Vorzugsweise ist der Verteiler mit einem Gebläse versehen. Dadurch wird eine zuverlässige Förderung des Streuguts durch die angeschlossenen Schlauchleitungen gewährleistet. Insbesondere bei kleineren Sägeräten kann aber auch eine Förderung ausschließlich durch Schwerkraft ausreichend sein. Dann ist das Gebläse entbehrlich.

### Kurze Beschreibung der Zeichnungen

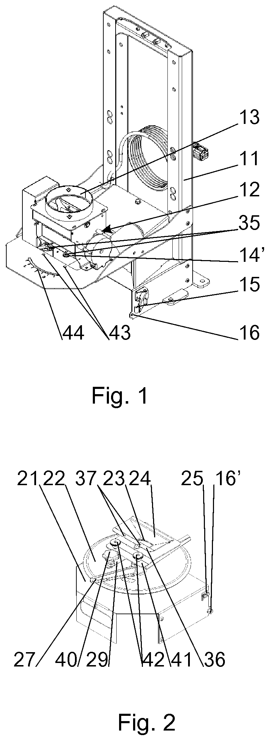

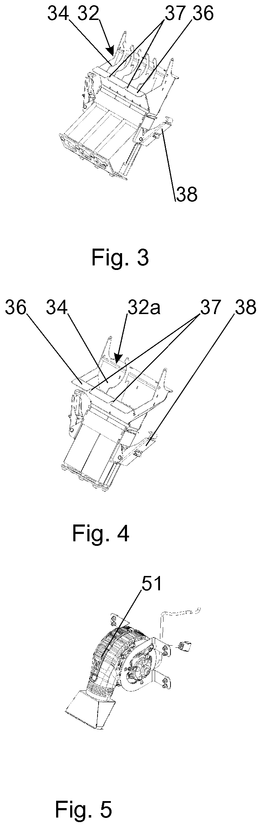

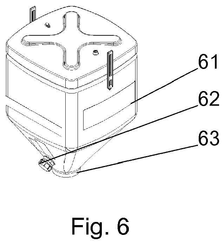

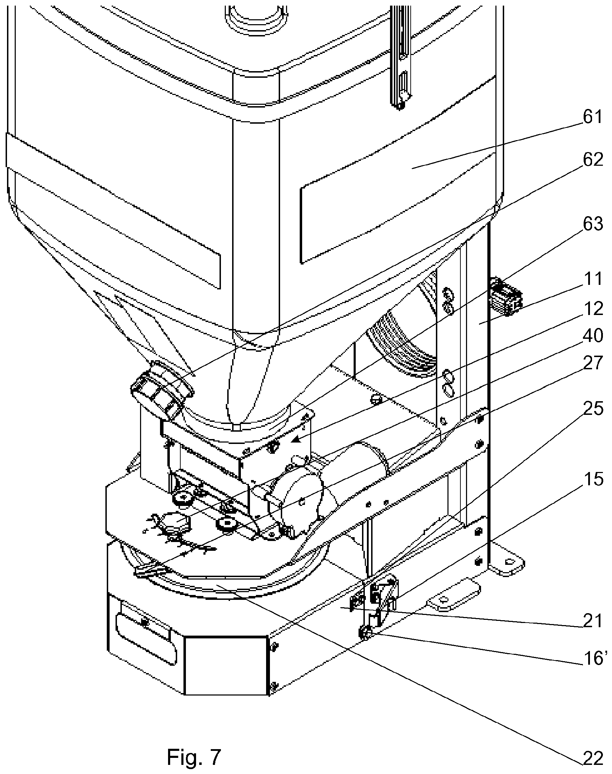

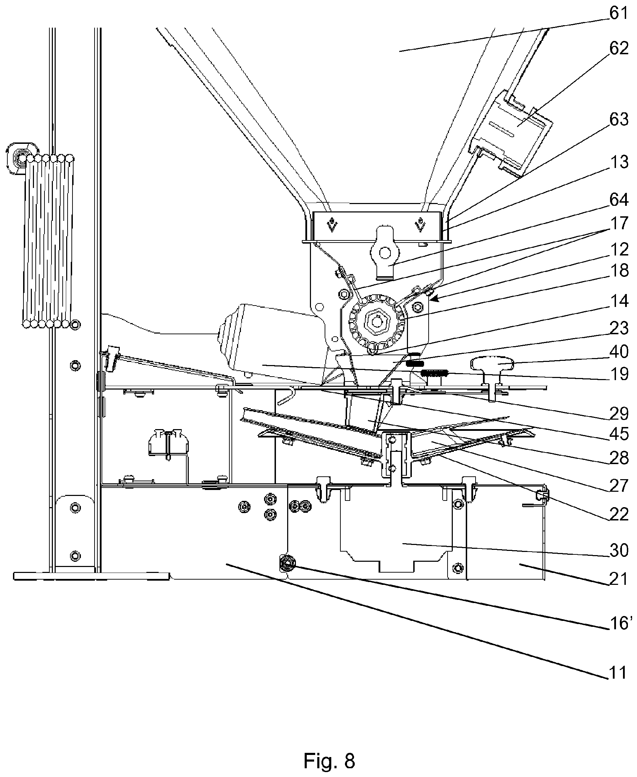

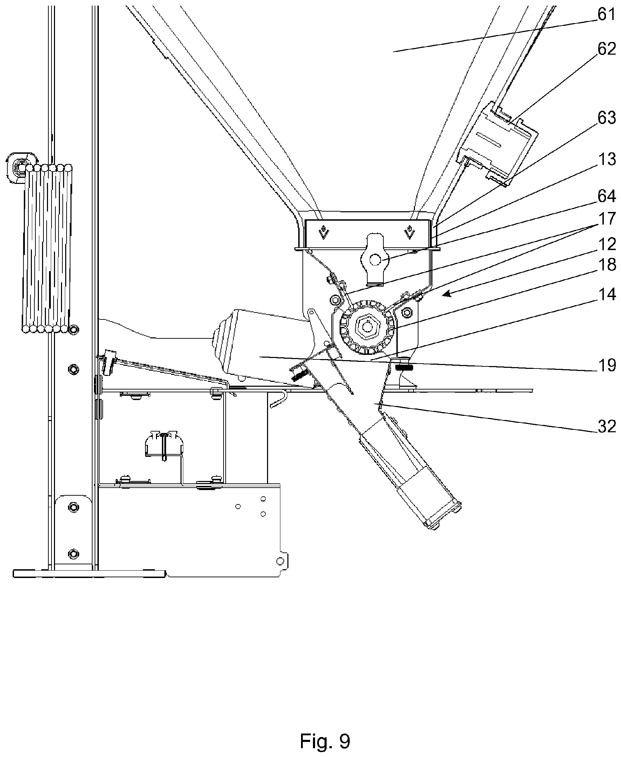

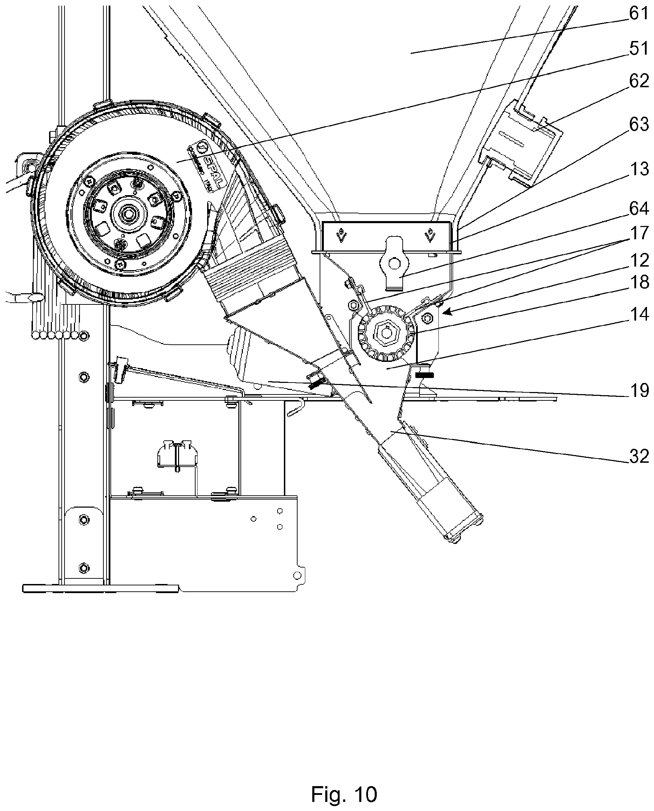

An Hand der beiliegenden Zeichnungen wird die vorliegende Erfindung näher erläutert. Es zeigt: Fig. 1 einen Grundrahmen mit abgenommenem Behälter; Fig. 2 einen Zusatzrahmen mit Streuteller; Fig. 3 einen Verteiler; Fig. 4 einen anderen Verteiler; Fig. 5 ein Gebläse, das mit den Verteilern gemäß Fig. 3 und 4 kombinierbar ist; Fig. 6 einen Behälter zur Befestigung am Grundrahmen gemäß Fig. 1; Fig. 7 einen Tellerstreuer, der aus den Komponenten der Fig. 1, 2 und 6 zusammengesetzt ist; Fig. 8 diesen Tellerstreuer im Schnitt; Fig. 9 einen Streuer, der aus den Komponenten der Fig. 1, 3 und 6 zusammengesetzt ist, im Schnitt; und Fig. 10 einen Streuer, der aus den Komponenten der Fig. 1, 3, 5 und 6 zusammengesetzt ist.

### Weg(e) zur Ausführung der Erfindung

Gemäß Fig. 1 ist an einem Grundrahmen 11 eine Dosiereinheit 12 befestigt. Wie aus Fig. 8 erkennbar, besteht die Dosiereinheit 12 im Wesentlichen aus einer Zellenradschleuse 18, wobei jede Zelle des Zellenrades ein bestimmtes Volumen an Saatgut aufnehmen kann. Bei einer Umdrehung des Zellenrades wird somit eine Menge an Saatgut, die diesem Volumen multipliziert mit der Anzahl der Zellen entspricht, durchgeschleust. Damit kein Saatgut ohne aktive Dosierung an den Zellenrädern vorbeiläuft, sind zwei Abstreifbesen 17 vorgesehen. Die Zellenradschleuse 18 wird durch einen Getriebemotor 19 angetrieben; durch Veränderung der Drehzahl des Getriebemotors 19 kann der Durchfluss durch die Zellenradschleuse 18 eingestellt werden.

Die Dosiereinheit 12 weist oben einen Anschluss 13 (siehe auch Fig. 1) für einen Behälter 61 (siehe auch Fig. 6) auf. Der Behälter 61 weist seinerseits eine Anschlussöffnung 63 auf, die an den Anschluss 13 angepasst ist (siehe Fig. 8). Auf diese Weise können Behälter mit verschiedenem Fassungsvermögen auf dem Grundrahmen 11 montiert werden. Der Behälter 61 weist wie üblich eine Entleerungsöffnung 62 auf.

Damit das Material im Behälter 61 sicher in die Dosiereinheit 12 gelangt, ist über der Dosiereinheit 12 ein Rührwerk 64 vorgesehen.

Die Dosiereinheit 12 hat unten einen Auslass 14, aus dem das dosierte Gut austritt. Der Auslass 14 hat einen Flansch 14' (siehe Fig. 1) mit Gewindebolzen, an die Handmuttern 35 aufgeschraubt sind.

Erfindungsgemäß kann an den Grundrahmen 11 ein Zusatzrahmen 21 (siehe Fig. 2) angeschlossen werden. Dazu hat der Grundrahmen 11 (siehe Fig. 1) einen Schnellverschluss 15, der mit einem Gegenstück 25 (siehe Fig. 2) am Zusatzrahmen 21 zusammenwirkt. Der Zusatzrahmen 21 ist daher sehr schnell demontierbar.

Auf dem Zusatzrahmen 21 ist ein Streuteller 22 mit Wurfschaufeln 27 montiert. Der Streuteller 22 wird samt den Wurfschaufeln 27 von einem Motor 30 (siehe Fig. 8) angetrieben. Durch Ändern der Drehzahl des Motors 30 ändert sich die Wurfbreite.

Damit das Material auf einen Punkt des Streutellers 22 aufgebracht wird, ist ein Sammeltrichter 23 vorgesehen. Die obere Öffnung 24 (siehe Fig. 2) des Sammeltrichters 23 ist dabei an den Auslass 14 (siehe Fig. 8) der Zellenradschleuse 18 angepasst. Die Öffnung 24 (siehe Fig. 2) hat einen Flansch 36, der zwei Schlitze 37 aufweist. Damit kann der Sammeltrichter 23 mit den Schlitzen 37 unter die Handmuttern 35 (siehe Fig. 1) geschoben und durch Festdrehen der Handmuttern 35 fixiert werden.

Damit der Punkt, auf den das Gut auf den Streuteller 22 (siehe Fig. 8) aufgegeben wird, verstellt werden kann, ist eine Auftreffpunktverstellung vorgesehen. Die Auftreffpunktverstellung besteht aus einem trichterförmigen Element 28, das um seine Vertikalachse verschwenkbar in einem Träger 45 montiert ist. Der Träger 45 weist einen Flansch 41 (siehe Fig. 2) mit Gewindebolzen auf, auf die Handmuttern 42 aufgeschraubt sind. Bei montiertem Träger 45 gehen die Gewindebolzen durch Bohrungen 43 (siehe Fig. 1) im Grundrahmen 11, wodurch durch Festschrauben der Handmuttern 42 der Träger 45 (siehe Fig. 8) fixiert ist. Mittels eines Einstellhebels 29 kann er so verschwenkt werden, dass das aufgegebene Gut von den Wurfschaufeln 27 optimal weggeschleudert wird. Der Einstellhebel 29 kann mittels einer Handschraube 40 in einem Schlitz 44 (siehe Fig. 1) des Grundrahmens 11 fixiert werden.

Zusätzlich zum Schnellverschluss 15 weisen der Zusatzrahmen 21 und der Grundrahmen 11 Öffnungen 16 auf, durch die eine Achse 16' (siehe Fig. 2, 7 und 8) gesteckt ist. Nach Lösen des Schnellverschlusses 15 (siehe Fig. 1) kann daher der Zusatzrahmen 21 (siehe Fig. 8) nach unten geschwenkt werden, sodass das trichterförmige Element 28 zugänglich ist. In diesem Zustand kann das durchgeschleuste Material sehr einfach gesammelt und gewogen werden, sodass die gewünschte Dosiermenge (in kg/min oder kg/h) auf einfache Weise präzise durch Änderung der Drehzahl des Getriebemotors 19 eingestellt werden kann. Zum Demontieren des Zusatzrahmens 21 muss nach dem Lösen des Schnellverschlusses 15 (siehe Fig. 1) natürlich auch die Achse 16' (siehe Fig. 2, 7 und 8) entfernt werden.

Die Elemente für den Tellerstreuer lassen sich einfach entfernen: Der Zusatzrahmen 21 lässt sich nach Lösen der Schnellverschlüsse 15 (und gegebenenfalls nach Entfernen der Achsen 16') abnehmen, und der Sammeltrichter 23 und die Auftreffpunktverstellung lassen sich nach Lösen von insgesamt fünf Handmuttern entfernen. In diesem Zustand kann man dann Verteiler 32, 32a, wie sie in den Fig. 3 und 4 dargestellt sind, an die Dosiereinheit 12 (siehe Fig. 1) anschließen. Zu diesem Zweck weisen die Verteiler 32, 32a (siehe Fig. 3 und 4) an der oberen Öffnung 34 einen Flansch 36 mit Schlitzen 37 auf, der dem Flansch 36 (siehe Fig. 2) des Sammeltrichters 23 genau entspricht. Die Verteiler 32, 32a (siehe Fig. 3 und 4) lassen sich also ebenfalls mit den Handmuttern 35 (siehe Fig. 1) befestigen. Die Anzahl der Abgänge der Verteiler 32, 32a ist beliebig, in den Fig. 3 und 4 sind lediglich beispielsweise sechs bzw. zwei Abgänge gezeigt.

Die Verteiler 32, 32a teilen das von der Zellenradschleuse 18 (siehe Fig. 8) durchgeschleuste Material in Teilströme, in diesem Beispiel in sechs bzw. zwei Teilströme, auf. Vom Verteiler 32, 32a (siehe Fig. 3 und 4) gehen dann entsprechend der Anzahl der Teilströme sechs oder zwei Schlauchleitungen weg, durch die das Saatgut weitergefördert wird.

Um hier eine Kalibrierung durchführen zu können, können die Verteiler 32, 32a in der Mitte mittels Schnellverschlüssen 38 geöffnet werden.

Wenn gewünscht kann die Förderung durch die Schlauchleitungen durch ein Gebläse 51 (siehe Fig. 5), das - wie in den Fig. 3 und 4 gesehen - hinter dem Verteiler 32, 32a montiert wird, unterstützt werden. Das Gebläse 51 kann am Grundrahmen 11 angeschraubt werden (siehe Fig. 1, 5 und 10).

Man kann also z.B. folgende Elemente anbieten:
Tellerstreuer
Verteiler für einen Teilstrom ohne Gebläse
Verteiler für einen Teilstrom mit Gebläse
Verteiler für zwei Teilströme ohne Gebläse
Verteiler für zwei Teilströme mit Gebläse
Verteiler für drei Teilströme ohne Gebläse
Verteiler für drei Teilströme mit Gebläse
Verteiler für vier Teilströme ohne Gebläse
Verteiler für vier Teilströme mit Gebläse
Verteiler für sechs Teilströme ohne Gebläse
Verteiler für sechs Teilströme mit Gebläse,
und der Kunde sucht sich die für ihn passenden Elemente aus. Wenn er wenigstens ein Element zusätzlich zum Tellerstreuer benötigt, ist dies für den Kunden bereits günstiger, als wenn er verschiedene Geräte kaufen müsste.

## Patentansprüche

1. Streuer mit einem Rahmen, der aus einem Grundrahmen (11) und aus einem Zusatzrahmen (21) besteht, wobei am Grundrahmen (11) ein Behälter (61) befestigt ist, wobei unter dem Behälter (61) am Grundrahmen (11) eine Dosiereinheit (12) angeordnet ist, wobei unter dem Behälter (61) am Zusatzrahmen (21) ein Streuteller (22) befestigt ist und wobei der Zusatzrahmen (21) mittels eines Schnellverschlusses (15, 25) am Grundrahmen (11) befestigt ist, **dadurch gekennzeichnet, dass** die Dosiereinheit (12) eine Zellenradschleuse (18) aufweist, die unten einen Auslass (14) für einen Sammeltrichter (23) aufweist, und dass der Sammeltrichter (23) an diesem Auslass (14) der Dosiereinheit (12) befestigt ist.

2. Streuer nach Anspruch 1, **dadurch gekennzeichnet, dass** der Zusatzrahmen (21) am Grundrahmen (11) um eine Achse (16') schwenkbar gelagert ist, sodass er nach Lösen des Schnellverschlusses (15, 25) nach unten wegschwenkbar ist.

3. Streuer nach Anspruch 1 oder 2, **dadurch gekennzeichnet, dass** ein Verteiler (32, 32a) vorgesehen ist, der nach Entfernen des Zusatzrahmens (21) und des Sammeltrichters (23) an den Auslass (14) der Dosiereinheit (12) anschließbar ist.

4. Streuer nach Anspruch 3, **dadurch gekennzeichnet, dass** der Verteiler (32, 32a) mit einem Gebläse (51) versehen ist.

## Claims

1. Spreader having a frame consisting of a base frame (11) and an additional frame (21), wherein a container (61) is attached to the base frame (11), wherein a dosing unit (12) is disposed on the base frame (11) below the container (61), wherein a spreading plate (22) is atteched to the additional frame (21) below the container (61), and wherein the additional frame (21) is fixed to the base frame (11) using a quick-release fastener (15, 25), **characterized in that** the dosing unit (12) includes a cellular wheel sluice (18) including an outlet (14) for a collecting funnel (23) below, and **in that** the collecting funnel (23) is fixed to this outlet (14) of the dosing unit (12).

2. Spreader according to claim 1, **characterized in that** the additional frame (21) is pivotably supported on the base frame (11) about an axis (16') such that after releasing the quick-release fastener (15, 25) it can be pivoted away downwards.

3. Spreader according to claim 1 or 2, **characterised in that** a distributor (32, 32a) is provided which, after removal of the additional frame (21) and the collecting funnel (23), is connectable to the outlet (14) of the dosing unit (12).

4. Spreader according to claim 3, **characterized in that** the distributor (32, 32a) is provided with a fan (51).

## Revendications

1. Epandeur comportant un cadre constitué d'un cadre de base (11) et d'un cadre supplémentaire (21), un récipient (61) étant fixé au cadre de base (11), une unité de dosage (12) étant fixée au cadre de base (11) en-dessous du récipient (61), un disque d'épandage (22) étant fixé au cadre supplémentaire (21) en-dessous du récipient (61), et le cadre supplémentaire (21) étant fixé au cadre de base (11) au moyen d'une fixation rapide (15, 25), **caractérisé en ce que** l'unité de dosage (12) comporte un sas à roue cellulaire (18) dont la partie basse est pourvue d'une sortie (14) destinée à une trémie de récupération (23) et que la trémie de récupération (23) est fixée à cette sortie (14) de l'unité de dosage (12).

2. Epandeur selon la revendication 1, **caractérisé en ce que** le cadre supplémentaire (21) est monté sur le cadre de base (11) de manière à pouvoir pivoter autour d'un axe (16'), faisant en sorte qu'il puisse être écarté, une fois la fixation rapide (15, 25) défaite, par un pivotement vers le bas.

3. Epandeur selon les revendications 1 ou 2, **caractérisé en ce qu**'il est doté d'un dispositif de distribution (32, 32a) qui peut être raccordé à la sortie (14) de l'unité de dosage (12) suite au retrait du cadre supplémentaire (21) et de la trémie de récupération (23).

4. Epandeur selon la revendication 3, **caractérisé en ce que** le dispositif de distribution (32, 32a) est pourvu d'un souffleur (51).
